# EUROPÄISCHE PATENTSCHRIFT

(11) **EP 1 227 021 B1**
(45) Veröffentlichungstag und Bekanntmachung des Hinweises auf die Patenterteilung: **14.04.2004**
(21) Anmeldenummer: 01130774.1
(22) Anmeldetag: 22.12.2001
(51) Int. Cl.: B60T 17/00, B60T 8/36

(54) **Mehrteilige Filterkombination**
Multipart filter combination
Combinaison de filtre en plusieurs parties

(30) Priorität: 25.01.2001 DE 10103284
(43) Veröffentlichungstag der Anmeldung: 31.07.2002
(73) Patentinhaber: ROBERT BOSCH GMBH, 70442 Stuttgart (DE)
(72) Erfinder: Fritsch, Siegfried, 87527 Sonthofen (DE); Schnalzger, Guenther, 87544 Blaichach (DE); Krauter, Michael, 87549 Untermaiselstein (DE); Zimmermann, Peter, 74360 Ilsfeld (DE); Bareiss, Alexander, 87509 Immenstadt (DE)

(56) Entgegenhaltungen:
- EP-A- 0 679 823
- US-A- 5 511 864
- US-A- 5 782 267

## Beschreibung

### Stand der Technik

Die Erfindung geht aus von einer in einer abgestuften Bohrung eines fluidführenden Bauteils angeordneten, mehrteiligen Filterkombination nach der Gattung des Patentanspruchs 1.

Aus EP 0 679 823 A1 ist eine derartige, mehrteilige Filterkombination bekannt, welche in Verbindung mit einem Elektromagnetventil Verwendung findet. Dieses Magnetventil besitzt einen Körper, der in einer abgestuften Bohrung eines Ventilblocks aufgenommen ist. In einen durchmessergrößeren Bohrungsabschnitt führen zwei fluidführende Leitungen; an einen durchmesserkleineren Bohrungsabschnitt ist bodenseitig eine fluidführende Leitung angeschlossen. In dem Körper des Magnetventils befindet sich ein Sitzventil, welches mit den Leitungen in Verbindung steht. Um das Sitzventil vor Fremdkörpern zu schützen, ist der Körper des Magnetventils mit zwei Filterteilen versehen: ein im wesentlichen scheibenförmiger Filterteil ist auf den Körper stirnseitig dort aufgesteckt, wo die Leitung in dem durchmesserkleineren Bohrungsabschnitt einmündet; ein hülsenförmiger Filterteil umschließt den Körper im Bereich des durchmessergrößeren Bohrungsabschnitts dort, wo die beiden fluidführenden Leitungen einmünden. Bei dieser bekannten Filterkombination sind zwei Montagevorgänge erforderlich, um die beiden Filterteile auf dem Körper des Magnetventils zu positionieren. Außerdem sind insbesondere am scheibenförmigen Filterteil zusätzliche Maßnahmen nötig, um dieses bis zur Montage des Magnetventilkörpers im Ventilblock in seiner Position zu halten. Hierdurch ist die Fertigung des Magnetventils verteuert.

### Vorteile der Erfindung

Die erfindungsgemäße Filterkombination mit den Merkmalen des Patentanspruchs 1 hat demgegenüber den Vorteil, daß die Handhabung und Montage der Filterkombination unterstützt und vereinfacht wird, weil die beiden Filterteile zunächst miteinander verbunden sind. Eine Fehlmontage durch falsch orientierte Filterteile ist daher weitgehend ausgeschlossen. Darüber hinaus ist von Vorteil, daß das Trennen der Filterteile und deren Einbringen in ihre jeweilige Endlage automatisiert werden kann, was die Sicherheit des Montagevorgangs wesentlich erhöht.

Durch die in den Unteransprüchen aufgeführten Maßnahmen sind vorteilhafte Weiterbildungen der im Patentanspruch 1 angegebenen Filterkombination gegeben.

Von besonderem Vorteil ist die Maßnahme nach Anspruch 3, weil hierdurch die Montage wesentlich vereinfacht und beschleunigt wird.

### Zeichnungen

Ein Ausführungsbeispiel der Erfindung ist in den Zeichnungen vereinfacht dargestellt und in der nachfolgenden Beschreibung näher erläutert. Es zeigen im Längsschnitt Figur 1 eine Filterkombination aus zwei miteinander verbundenen Filterteilen, Figur 2 die an einem Werkstück aufgenommene und in eine Bohrung gefügte Filterkombination und Figur 3 die vom Werkstück getrennten und in ihrer Endlage positionierten Filterteile der Filterkombination.

### Beschreibung des Ausführungsbeispiels

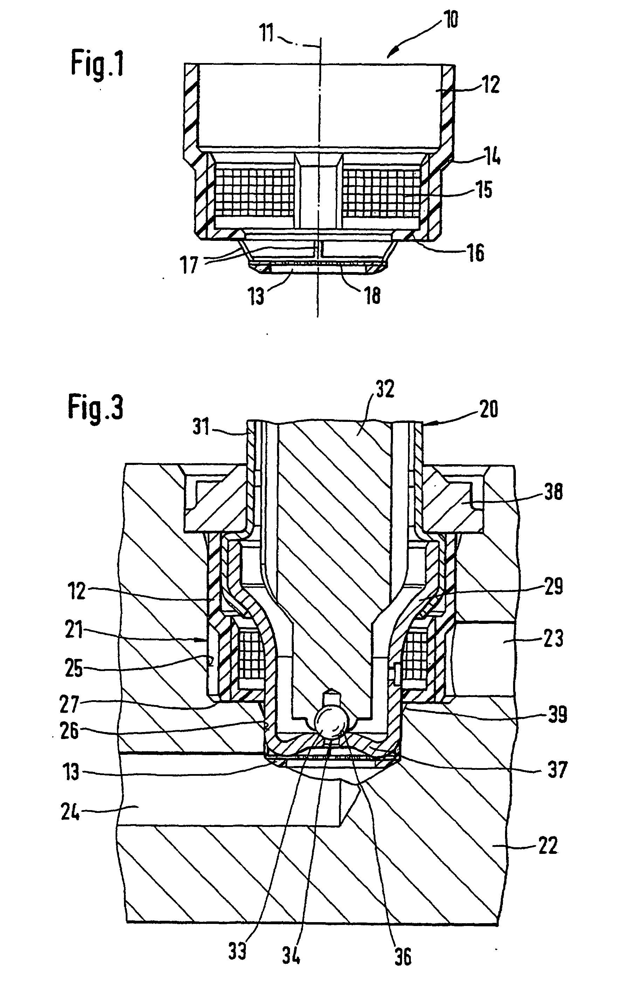

Eine in Figur 1 geschnitten dargestellte, topfförmige Filterkombination 10 ist im wesentlichen um ihre Längsachse 11 rotationssymmetrisch ausgebildet und besteht aus einem durchmessergrößeren, hülsenförmigen Filterteil 12 sowie einem durchmesserkleineren, scheibenförmigen Filterteil 13. Der Filterteil 12 bildet einen Mantel 14 mit teils eingespritztem, teils freiliegendem Filtergewebe 15 sowie einen radial einwärts gerichteten Bodenring 16 der mehrteiligen Filterkombination 10. Der scheibenförmige Filterteil 13 gehört gleichfalls zum Boden der Filterkombination 10 und ist durch einen Verbindungsteil in Form von mehreren Stegen 17 geringen Querschnitts mit dem Bodenring 16 des Federteils 12 verbunden. Abweichend vom dargestellten Ausführungsbeispiel kann der Verbindungsteil auch in Form einer sich zwischen dem Bodenring 16 und dem Filterteil 13 erstreckenden, umlaufenden Wandung geringer Wandstärke ausgebildet sein. In dem Filterteil 13 ist ein randseitig eingespritztes Filtergewebe 18 aufgenommen. Die Filterteile 12 und 13 sowie die Verbindungsstege 17 bestehen aus einem thermoplastischen Kunststoff, die Filtergewebe 15 beziehungsweise 18 sind von einem Siebgewebe aus Kunststoff- oder Metallfäden gebildet.

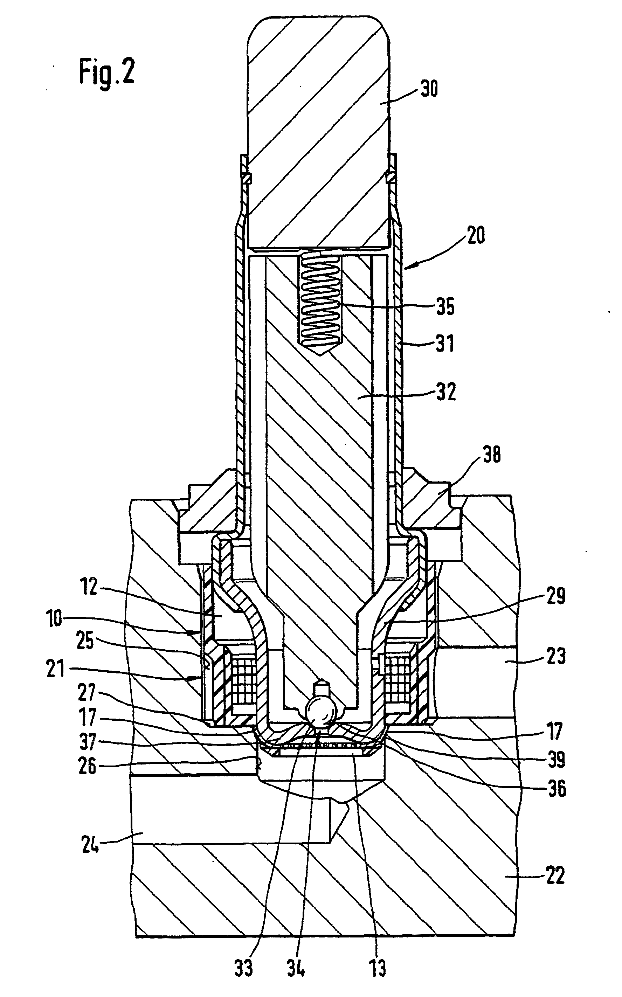

Die Filterkombination 10 ist ebenso wie ein in den Figuren 2 und 3 dargestellter hydraulischer Teil 20 eines Magnetventils in eine abgestufte Bohrung 21 eines Ventilblocks 22 zu fügen. Der Ventilblock 22 ist ein fluidführendes Bauteil und weist zu diesem Zweck zwei Leitungen 23 und 24 auf, von denen die Leitung 23 umfangsseitig in einen durchmessergrößeren Abschnitt 25 der Bohrung 21 einmündet, während die Leitung bodenseitig an einen durchmesserkleineren Bohrungsabschnitt 26 angeschlossen ist. Zwischen den beiden Bohrungsabschnitten 25 und 26 befindet sich eine ebene Bohrungsstufe 27.

Der hydraulische Teil 20 weist eine Ventilhülse 29 auf, welche mit einem durch einen Polkern 30 verschlossenen Ankerführungsrohr 31 dicht verbunden ist. In dem Ankerführungsrohr 31 ist ein längsbewegbarer Magnetanker 32 mit einem Schließkörper 33 eines Sitzventils 34 aufgenommen. Zwischen dem Polkern 30 und dem Magnetanker 32 ist eine Rückstellfeder 35 angeordnet, welche den Schließkörper 33 gegen einen Ventilsitz 36 des Sitzventils 34 drückt, der in einem Boden 37 der Ventilhülse 29 ausgebildet ist. Die Ventilhülse 39 ist boden- und mantelseitig mit nicht näher bezeichneten Durchbrüchen versehen, welche das Innere des hydraulischen Teils 20 mit den Leitungen 23 und 24 verbinden.

Um das Sitzventil 24 vor Fremdkörpern zu schützen, welche sich in dem Fluid befinden, das durch die Leitungen 23 und 24 herangeführt wird, ist der Filterteil 12 umfangsseitig der Ventilhülse 29 in dem Bohrungsabschnitt 25 aufgenommen, während der Filterteil 13 zwischen dem Hülsenboden 37 und dem Grund des Bohrungsabschnitts 26 liegt. Außerdem ist ein Haltering 38 zur Befestigung des hydraulischen Teils 20 in dem Ventilblock 22 vorgesehen. Zur Vervollständigung des Magnetventils gehört ein auf den Polkern 30 und das Ankerführungsrohr 31 steckbarer, elektromagnetischer Teil, der in den Zeichnungen jedoch nicht dargestellt ist.

Das Fügen der mehrteiligen Filterkombination 10 in die abgestufte Bohrung 21 des Ventilblocks 22 ist auf folgende Weise durchführbar:

Die Filterkombination 10 wird auf den hydraulischen Teil 20 aufgesteckt, so daß der scheibenförmige Filterteil 13 am Hülsenboden 37 anliegt und der Bodenring 16 des Filterteils 12 mantelseitig an der Ventilhülse 29 angreift, während der vom Bodenring abgewandte Rand des Filterteilmantels 14 den ventilhülsenseitigen Endabschnitt des Ankerführungsrohrs 31 übergreift (Figur 2). Der hydraulische Teil 20 wird zusammen mit der aufgesteckten Filterkombination 10 in die Bohrung 21 des Ventilblocks 22 eingeführt. Dabei erreicht die Filterkombination 10 eine in Figur 2 dargestellte Position, in welcher der Filterteil 12 mit seinem Bodenring 16 zur Anlage an der Bohrungsstufe 27 kommt und der Filterteil 13 sich in dem Bohrungsabschnitt 26 befindet. In dieser Position kommen die Verbindungsstege 17 zwischen den beiden Filterteilen 12 und 13 in der geringfügig gegen die Bohrungsstufe 27 angefasten Mündung 39 des durchmesserkleineren Bohrungsabschnitts 26 zu liegen. Beim weiteren Bewegen des hydraulischen Teils 20 in die Bohrung 21 hinein wird der Filterteil 12 an der Bohrungsstufe 27 zurückgehalten, während die Verbindungsstege 17 durchtrennt und der Filterteil 13 von dem Hülsenboden 37 der Ventilhülse 29 am Grund des Bohrungsabschnitts 26 positioniert wird. Die Mündung 39 wirkt somit als Scher- oder Trennstelle für die Verbindungsstege 17, um die beiden Filterteile 12 und 13 zu separieren, damit diese ihre jeweilige, in Figur 3 dargestellte Endlage in der Bohrung einnehmen können. Der Abschervorgang ist störungsfrei durchführbar, wenn der Hülsenboden 37 randseitig oder vollflächig am Filterteil 13 angreift und der Außendurchmesser des in den Bohrungsabschnitt 26 einzuführenden Teils der Ventilhülse 29 dem Innendurchmesser dieses Bohrungsabschnitts entspricht oder Übermaß hat, um einen Preßsitz zu erzeugen, der eine den hydraulischen Teil 20 umgehende Verbindung der beiden Leitungen 23 und 24 verhindert.

Abweichend vom Ausführungsbeispiel kann die Filterkombination 10 auch in ein fluidführendes Bauteil sonstiger Verwendung gefügt werden. Dabei kann die Filterkombination 10 als Einzelteil entsprechend Figur 2 in dem Bauteil positioniert werden. Ein Werkstück, welches in das Bauteil zu fügen ist, kann entsprechend dem vorbeschriebenen hydraulischen Teil 20 in dem Bauteil angeordnet werden und in gleicher Weise das Trennen der Filterteile 12 und 13 sowie deren Positionieren in die jeweilige Endlage übernehmen. Statt des in dem Bauteil verbleibenden Werkstück kann auch ein Stempel benutzt werden, der die Filterkombination 10 trennt und deren Filterteile 12 und 13 positioniert, um anschließend in einem Rückhub zurückgezogen zu werden.

## Patentansprüche

1. Mehrteilige Filterkombination für eine abgestuften Bohrung (21) eines fluidführenden Bauteils (22) (10), von der ein durchmessergrößerer Filterteil (12) einem durchmessergrößeren Bohrungsabschnitt (25) und eine durchmesserkleinerer Filterteil (13) einem durchmesserkleineren Bohrungsabschnitt (26) zugeordnet ist, **dadurch gekennzeichnet, daß** die beiden Filterteile (12, 13) der Filterkombination (10) durch wenigstens einen Verbindungsteil (17) verbunden sind, welcher beim Fügen beider Filterteile (12, 13) in deren jeweilige Endlage in der Bohrung (21) mittels eines in diese einzuführenden Stempels (20) trennbar ist.

2. Filterkombination nach Anspruch 1, **dadurch gekennzeichnet, daß** der Verbindungsteil von einer zwischen den beiden Filterteilen (12, 13) verlaufenden Wandung oder von Stegen (17) gebildet ist.

3. Filterkombination nach Anspruch 1, **dadurch gekennzeichnet, daß** der Stempel (20) ein in die Bohrung (21) des Bauteils (22) zu fügendes Werkstück ist.

4. Filterkombination nach Anspruch 1, **dadurch gekennzeichnet, daß** der durchmessergrößere Filterteil (12) an einer Stufe (27) der Bohrung (21) abgestützt ist, während der durchmesserkleinere Filterteil (13) in den durchmesserkleineren Bohrungsabschnitt (26) eingreift, wobei die Mündung (39) dieses Bohrungsabschnitts (26) eine Scher- oder Trennstelle für den Verbindungsteil (17) bildet.

5. Filterkombination nach Anspruch 2, **dadurch gekennzeichnet, daß** diese aus einem hülsenförmigen, durchmessergrößeren Filterteil (12) und einem scheibenförmigen, durchmesserkleineren Filterteil (13) besteht, welche gleichachsig zueinander angeordnet sind und mit dem Verbindungsteil (17) einen topfförmigen Körper bilden, dessen Boden im wesentlichen der scheibenförmige Filterteil (13) und der Verbindungsteil (17) sind.

## Claims

1. Multi-part filter combination (10) for a stepped bore (21) of a fluid-carrying component (22), of which filter combination a filter part (12) of larger diameter is assigned to a bore portion (25) of larger diameter, and a filter part (13) of smaller diameter is assigned to a bore portion (26) of smaller diameter, **characterized in that** the two filter parts (12, 13) of the filter combination (10) are connected by means of at least one connection part (17) which, when the two filter parts (12, 13) are inserted into their respective end positions in the bore (21), can be separated by means of a ram (20) to be introduced into the said bore.

2. Filter combination according to Claim 1, **characterized in that** the connection part is formed by a wall running between the two filter parts (12, 13) or by webs (17).

3. Filter combination according to Claim 1, **characterized in that** the ram (20) is a workpiece to be inserted into the bore (21) of the component (22).

4. Filter combination according to Claim 1, **characterized in that** the filter part (12) of larger diameter is supported on a step (27) of the bore (21), whilst the filter part (13) of smaller diameter engages into the bore portion (26) of smaller diameter, the mouth (39) of this bore portion (26) forming a shearing or separating point for the connection part (17).

5. Filter combination according to Claim 2, **characterized in that** it consists of a sleeve-shaped filter part (12) of larger diameter and of a disc-shaped filter part (13) of smaller diameter which are arranged coaxially to one another and, with the connection part (17), form a pot-shaped body, the bottoms of which are essentially the disc-shaped filter part (13) and the connection part (17).

## Revendications

1. Combinaison de filtre en plusieurs parties (10) pour un alésage étagé (21) d'une pièce (22) conduisant un fluide, dont une partie de filtre de plus grand diamètre (12) est associée à une partie d'alésage de plus grand diamètre (25) et une partie de filtre de plus petit diamètre (13) est associée à une partie d'alésage de plus petit diamètre (26),
**caractérisée en ce que**
les deux parties de filtre (12, 13) de la combinaison de filtre (10) sont assemblées par au moins une pièce d'assemblage (17) qui, lors de la jonction des deux parties de filtre (12, 13) dans leur position finale respective dans l'alésage (21), est séparable au moyen d'un poinçon (20) à introduire dans celui-ci.

2. Combinaison de filtre selon la revendication 1,
**caractérisée en ce que**
la pièce d'assemblage est formée d'une paroi ou de nervures (17) s'étendant entre les deux parties de filtre (12, 13).

3. Combinaison de filtre selon la revendication 1,
**caractérisée en ce que**
le poinçon (20) est une pièce à joindre dans l'alésage (21) de la pièce (22).

4. Combinaison de filtre selon la revendication 1,
**caractérisée en ce que**
la partie de filtre de plus grand diamètre (12) est appuyée sur un épaulement (27) de l'alésage (21), tandis que la partie de filtre de plus petit diamètre (13) s'engage dans la partie d'alésage de plus petit diamètre (26), l'embouchure (39) de cette partie d'alésage (26) forment une zone de coupure ou de séparation pour la pièce d'assemblage (17).

5. Combinaison de filtre selon la revendication 2,
**caractérisée en ce que**
celle-ci se compose d'une partie de filtre de plus grand diamètre (12) en forme de douille et d'une partie de filtre de plus petit diamètre (13) en forme de disque, qui sont disposées sur un même axe l'une par rapport à l'autre et qui forment avec la pièce d'assemblage (17) un corps en forme de godet, dont le fond est formé essentiellement par la partie de filtre en forme de disque (13) et la pièce d'assemblage (17).
